# FASCICULE DE BREVET EUROPEEN

(11) **EP 1 770 328 B1**
(45) Date de publication et mention de la délivrance du brevet: **16.10.2019**
(21) Numéro de dépôt: 06291499.9
(22) Date de dépôt: 22.09.2006
(51) Int. Cl.: F28F 21/02, F21V 14/00

(54) **Dispositif d'éclairage et/ou de signalisation pour véhicule automobile incorporant un matériau présentant une anisotropie thermique**
Beleuchtungsvorrichtung und/oder Signalvorrichtung für Fahrzeuge mit einem thermisch anisotropischen Material
Lighting and/or signaling device for a automotive vehicule incorporating a material with thermal anisotropy

(30) Priorité: 30.09.2005 FR 0510034
(43) Date de publication de la demande: 04.04.2007
(73) Titulaire: VALEO VISION, 93012 Bobigny Cedex (FR)
(72) Inventeur: Nicolai, Jean-Marc, 92400 Courbevoie (FR)

(56) Documents cités:
- FR-A- 2 858 043
- US-A1- 2003 116 312
- US-A1- 2004 202 007
- US-A1- 2005 094 411
- US-B1- 6 968 890

## Description

L'invention concerne de manière générale des dispositifs d'éclairage et/ou signalisation destinés à être montés dans des véhicules automobiles. Plus particulièrement, l'invention concerne des dispositifs d'éclairage et/ou signalisation pour véhicule automobile comprenant au moins une source de lumière à diode électroluminescente de puissance et d'autres moyens susceptibles de constituer une ou plusieurs sources de chaleur de nature à affecter l'environnement thermique de la source de lumière à diode électroluminescente de puissance.

Le document US2005/009441A1 montre un dispositif d'éclairage et/ou signalisation d'après le préambule de la revendication 1.

Les développements technologiques récents dans le domaine des diodes électroluminescentes de puissance de couleur blanche rendent de plus en plus probable une montée en puissance de l'utilisation de ces sources de lumière pour la réalisation des fonctions d'éclairage et de signalisation dans un véhicule.

Sur le plan des performances techniques, les diodes électroluminescentes de puissance, dites «led de puissance», présentent des points forts indéniables les rendant particulièrement attractives dans un certains nombre d'applications. Pour ce qui est de leur durée de vie, de leur endement et de leur facteur de forme, les diodes led de puissance sont d'un grand intérêt notamment par rapport à des sources de lumière plus traditionnelles telles que les lampes à filament.

L'intégration des diodes led de puissance dans les projecteurs d'éclairage et les feux de signalisation posent cependant des difficultés et contraintes nouvelles liées à la nécessité d'une gestion thermique performante dans l'environnement relativement confiné que représente le volume interne d'un projecteur ou d'un feu de signalisation. Ces contraintes de gestion thermique sont plus particulièrement difficiles à tenir dans le cas d'un projecteur, notamment du fait de la localisation de celui-ci en partie dans le compartiment moteur du véhicule et des puissances d'éclairage concernées.

Cette gestion thermique performante est imposée dans le cas des diodes led de puissance par le fait que les valeurs nominales maximales des températures de jonction de celles-ci, de l'ordre de 150°C, sont relativement basses dans le contexte des applications automobiles d'éclairage / signalisation. En effet, il est fréquent dans un projecteur d'atteindre une température ambiante interne de 90 à 100°C.

Des solutions techniques actuelles consistent à monter les substrats supportant les diodes led de puissance sur un ou plusieurs radiateurs en aluminium, en contact thermique étroit avec ceux-ci. Une circulation forcée de l'air au moyen d'un ventilateur est également parfois introduite de manière à améliorer la dissipation thermique. Ces solutions connues peuvent conduire à des radiateurs de volume et poids conséquents qui rendent délicate la conception des dispositifs d'éclairage / signalisation modernes dans lesquels doivent être implantées de nouvelles fonctions de type AFS. AFS est l'abréviation du terme anglais Advanced Front lighting System, et regroupe dans une récente réglementation européenne un certain nombre de fonctions nouvelles comme le code virage, appelé aussi en anglais DBL pour « dynamic bending light » ou le code autoroute appelé en anglais « motorway ».

Ces nouvelles fonctions peuvent conduire à ajouter des sources de lumière supplémentaires qui constituent autant de sources de chaleur proches ayant un impact sensible sur la température de jonction des diodes led de puissance.

Par ailleurs, sans rentrer ici dans les détails des inconvénients habituels liés au poids des équipements installés dans un véhicule automobile, notons plus particulièrement que l'intégration de radiateurs accroît de manière sensible l'inertie mécanique des pièces supportant les diodes led, sachant que celles-ci sont susceptibles de se déplacer en rotation de manière dynamique dans le cadre d'une fonction d'éclairage code virage (DBL pour «Dynamic Bending Light» en anglais).

Selon un premier aspect, la présente invention fournit un dispositif d'éclairage et/ou signalisation pour véhicule automobile comprenant au moins une source de lumière à diode électroluminescente de puissance et d'autres moyens susceptibles de constituer une ou plusieurs sources de chaleur de nature à affecter l'environnement thermique de ladite source de lumière à diode électroluminescente de puissance.

Conformément à l'invention, le dispositif d'éclairage et/ou signalisation comprend une pièce de support formée au moins partiellement dans un matériau à base de graphite anisotrope supportant ladite source de lumière à diode électroluminescente de puissance et s'opposant à un effet desdits autres moyens sur ledit environnement thermique de ladite source de lumière à diode électroluminescente de puissance.

L'invenction concerne donc unispositif d'éclairage et/ou signalisation pour véhicule automobile comprenant au moins une source de lumière à diode électroluminescente de puissanceet au moins une autre source de chaleur, comprenant une pièce de support formée au moins partiellement dans un matériau à base de graphite anisotrope supportant ladite source de lumière à diode électroluminescente de puissance et s'opposant à un effet desdits autres moyens sur ledit environnement thermique de ladite source de lumière à diode électroluminescente de puissance.

D'après l'invention, la pièce support comprend une paroi séparant la source de lumière à diode de l'autre source de chaleur, et cette paroi présente une résistance thermique supérieure à travers son épaisseur que longitidinalement. Cette paroi peut alors servir d'écran thermique entre la diode électroluminescente, appelée aussi « led » par soucis de concision, et une autre source de chaleur d'un projecteur automobile, notamment une lampe conventionnelle du type à filament ou une lampe xénon. La pièce support, de part son anisotropie conférée par le graphite qui la compose au moins partiellement, et de part sa forme, peut ainsi avoir une conductivité thermique modulée : être aussi peu conductrice que possible entre la led et la source de chaleur autre, et, au contraire, être aussi conductrice que possible entre la led et une zone « froide » du projecteur, ou du voisinage du projecteur.

L'utilisation selon l'invention du graphite anisotrope, notamment un graphite se présentant dans une structure en lamelles, autorise la réalisation de dispositifs d'éclairage et/ou signalisation compacts et légers, tout en satisfaisant aux contraires thermiques imposées aux diodes électroluminescentes de puissante. Ce résultat est rendu possible notamment du fait des caractéristiques supérieures du graphite anisotrope par rapport à l'aluminium, en termes de masse volumique et de conductivité thermiques, ainsi que par la forte anisotropie thermique que présente ce matériau. Cette anisotropie thermique permet la conception d'écrans thermiques vis-à-vis de sources de chaleur, telles que des lampes à filament, situées à proximité des diodes.

Le dispositif selon l'invention peut également comprendre une ou plusieurs des caractéristiques suivantes :
- la pièce de support comprend au moins un radiateur de dissipation thermique.
- il est prévu dans le dispositif un ventilateur apte à forcer une circulation d'air à travers le radiateur de dissipation thermique.
- le radiateur comporte au moins une partie formée dans un matériau à base de graphite anisotrope, cette partie ayant une direction privilégiée de conductivité thermique qui est parallèle à des ailettes dudit radiateur.
- le radiateur de dissipation thermique comporte au moins une partie en aluminium.
- il est prévu dans le dispositif des éléments conférant une rigidité mécanique à la pièce de support.
- les éléments de rigidité mécanique comprennent au moins un substrat électronique sur lequel est monté la source de lumière à diode électroluminescente de puissance.
- les éléments de rigidité mécanique comprennent au moins deux plaques rigides disposées, dans une configuration en sandwich, de part et d'autre d'au moins une partie du matériau à base de graphite anisotrope.
- une au moins des plaques rigides est constituée par un substrat électronique sur lequel est monté la source de lumière à diode électroluminescente de puissance.
- une au moins des plaques rigides est une plaque formant plan de masse apte à remplir une fonction de blindage de électromagnétique.
- il est prévu dans le dispositif des moyens coopérant avec la pièce de support de manière à autoriser un réglage en rotation, selon au moins un axe prédéterminé, de la pièce de support.

Dans le dispositif d'éclairage et/ou signalisation selon l'invention, les autres moyens susceptibles de constituer une ou plusieurs sources de chaleur sont constitués par au moins une source de lumière parmi les suivantes : une source de lumière à diode électroluminescente de puissance, une lampe à incandescence et une lampe à décharge appelée aussi lampe xénon.

Avantageusement, la pièce support comprend plusieurs parois, notamment disposées obliquement ou perpendiculairement l'une à l'autre.

Les différentes parois de la pièce support peuvent être mono ou multi composants : elles peuvent être faites de matériaux différents (graphite anistrope renforcé mécaniquement ou non par exemple), et/ou être fabriquées séparément puis assemblées ou fabriquées en une seule étape.

Selon d'autres aspects, l'invention concerne également un système d'éclairage et/ou signalisation pour véhicule automobile comprenant au moins deux dispositifs d'éclairage et/ou signalisation tels que décrits brièvement ci-dessus, ainsi qu'un véhicule automobile équipé d'au moins un dispositif de l'invention.

D'autres aspects et avantages de la présente l'invention apparaîtront plus clairement à la lecture de la description de formes de réalisation particulières qui vont suivre, cette description étant donnée à titre d'exemple non limitatif et faite en référence aux dessins annexés, dans lesquels :
- la Fig.1 est une vue d'ensemble, de face, d'un projecteur selon l'invention comprenant un module d'éclairage à diode électroluminescente de puissance;
- la Fig.2 est une vue partielle, en coupe verticale, du module d'éclairage à diode électroluminescente de puissance inclus dans le projecteur de la Fig. 1 ;
- la Fig.3 est une vue partielle en perspective d'une pièce de support en graphite anisotrope comprise dans le projecteur de la Fig.1, au niveau d'une portion de la pièce supportant une diode électroluminescente de puissance;
- les Figs.4 et 5 montrent deux autres formes de réalisation de la pièce de support en graphite anisotrope.

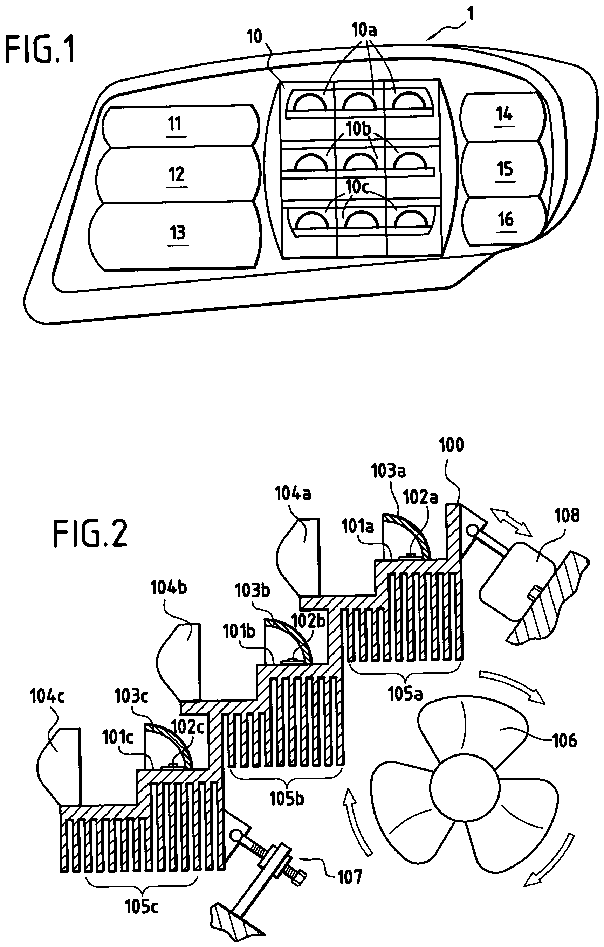

En référence essentiellement aux Figs.1 à 3, il est maintenant décrit une première forme de réalisation particulière, désignée globalement 1, d'un dispositif d'éclairage et/ou signalisation tel que projecteur selon l'invention.

Dans cette forme de réalisation particulière, le projecteur 1 comprend des sources de lumière de différents types, à savoir, des diodes électroluminescentes de puissance et des lampes à incandescence. Ces différentes sources de lumière sont incluses dans des modules d'éclairage et de signalisation 10 à 16 du projecteur 1, modules qui sont montrés en vue de face à la Fig.1.

Dans cet exemple de réalisation, le module d'éclairage 10 est un module d'éclairage code / route comprenant neuf diodes led de puissance émettant une lumière blanche.

Les modules 11 à 16 sont des modules d'éclairage et des modules de signalisation remplissant des fonctions telles que éclairage antibrouillard, indicateur clignotant de changement de direction, éclairage de jour (DRL pour «Day Running Light» en anglais) et des fonctions AFS telles que code virage fixe, éclairage autoroute et autres.

En variante, les modules 11 à 16 peuvent également comprendre comme sources de lumière des diodes led de puissance. Dans une autre variante de réalisation, un des modules 11 à 16 est muni d'une lampe à décharge de type xénon et assure la fonction d'éclairage route.

En référence maintenant plus particulièrement à la Fig.2, le projecteur 1 comprend une pièce de support 100 ayant des parties étagées horizontales 101a, 101b et 101c sur lesquelles sont montées des diodes led de puissance 102a, 102b et 102c. Chaque partie étagée 101a, 101b, 101c supporte trois diodes led montées à proximité l'une de l'autre sur un même plan horizontal. La Fig.2 étant une vue en coupe verticale à travers le module d'éclairage 10, une diode led seulement apparaît dans cette figure dans chacune des parties étagées 101a, 101b, 101c.

Les diodes led 102a, 102b et 102c en association avec des réflecteurs 103a, 103b et 103c et des optiques 104a, 104b et 104c respectifs forment des sous-modules d'éclairage 10a, 10b et 10c compris dans le module d'éclairage 10. Il est ainsi produit un faisceau de lumière global qui est composé des différentes sorties de lumière fournies par ces sous-modules d'éclairage 10a, 10b et 10c.

Outre la fonction de support de montage des diodes led de puissance, des optiques et des réflecteurs, la pièce 100 participe à la gestion thermique du projecteur 1.

Conformément à l'invention, une gestion thermique optimale peut être obtenue en réalisant la pièce 100 à partir d'un matériau anisotrope présentant des conductivités thermiques différentes selon au moins deux axes. Cette caractéristique d'anisotropie de la pièce 100 est décrite plus en détail dans la suite de la description.

Comme montré à la Fig.2, la pièce 100 comporte une pluralité d'ailettes de refroidissement 105a, 105b et 105c se prolongeant vers le bas à partir de faces opposées à celles sur lesquelles sont montées les diodes led 102a, 102b et 102c. Dans cette forme de réalisation particulière, la conduction de l'air à travers les ailettes 105a, 105b et 105c est forcée au moyen d'un ventilateur 106 intégré dans le boîtier du projecteur 1.

De manière connue, il est prévu une relation mécanique autorisant un pivotement limité entre la pièce 100 et le boîtier du projecteur 1 fixé à la carrosserie du véhicule. Le pivotement de la pièce 100 autorise un réglage de l'angle de site du projecteur 1 par rotation de la pièce 100 autour d'un axe horizontal perpendiculaire à l'axe longitudinal du véhicule. Un ensemble formant pivot 107 et un actionneur 108, montrés à la Fig.2, sont prévus dans le projecteur 1 de façon à permettre cette relation mécanique de pivotement limité.

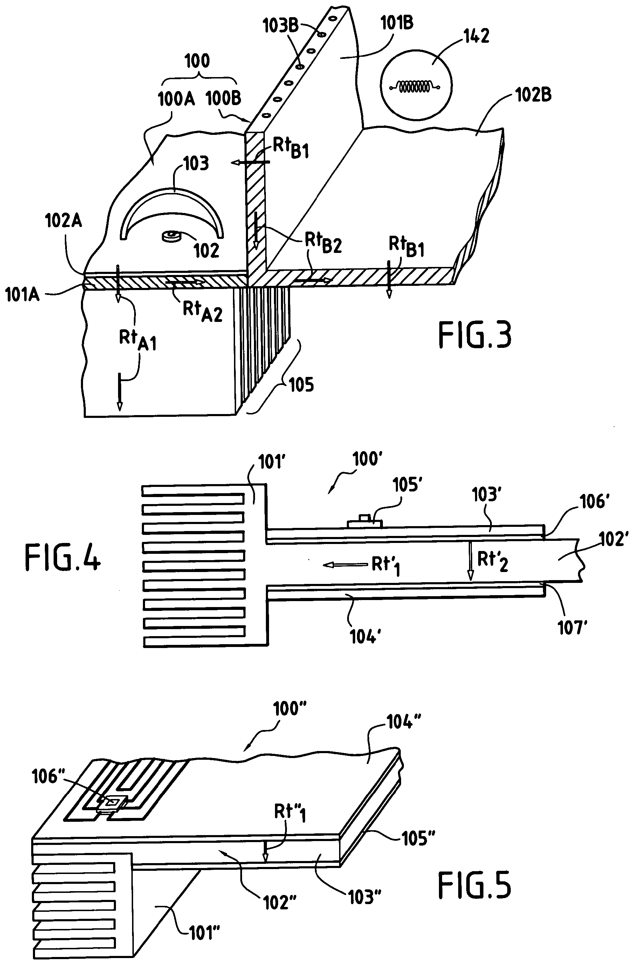

En référence à la Fig.3, la pièce 100 est maintenant décrite plus en détail notamment relativement à sa caractéristique d'anisotropie.

Dans la forme de réalisation montrée à la Fig.3, cette pièce 100 est de type composite en ce qu'elle est formée par collage de deux parties 100A et 100B en un ensemble monobloc.

Les parties 100A et 100B sont obtenues à partir d'un ou plusieurs matériaux anisotropes. De préférence, il est utilisé des graphites anisotropes tels que ceux commercialisés par la société Graftech International, Ltd, Cleveland, Ohio, Etats-Unis d'Amérique et décrits dans les brevets US-2002/0142165 et US-6,482,520 dont les divulgations devront être considérées comme intégrées par référence dans la présente demande. De tels graphites peuvent être obtenus avec des rapports d'anisotropie thermique allant de 5 à 50.

Les graphites anisotropes tels que ceux commercialisés par la société Graftech et présentant les caractéristiques thermiques adaptées peuvent dans certains cas, tels quels, s'avérer mécaniquement peu compatibles pour la réalisation de la pièce 100. Ainsi, par exemple, le graphite ayant la caractéristique d'anisotropie adéquate peut s'avérer trop flexible, ce qui est pénalisant compte tenu des impératifs de positionnement précis imposés fréquemment aux différents éléments fonctionnels d'un système optique.

Conformément à l'invention, une rigidité et des propriétés mécaniques appropriées peut être apportée à la pièce 100 par différents moyens tels que la fixation en surface d'une plaquette rigide (par exemple, un substrat électronique) ou l'incorporation lors de la fabrication du matériau graphite de un ou plusieurs éléments rigides noyés dans la masse du matériau.

La flexibilité du graphite anisotrope est cependant avantageuse pour remplir une fonction d'interface thermique entre les substrats électroniques et les éléments de dissipation thermique. Le graphite de marque déposée GRAFOIL pourra par exemple être utilisé pour les interfaces thermiques.

Comme cela apparaît à la Fig.3, la partie 100A est celle formant radiateur de dissipation thermique à proprement parler et ayant à charge de dissiper la chaleur générée notamment par les diodes led 102.

La partie 100A comprend une portion formant base 101A ayant une première face sur laquelle est fixé un substrat électronique 102A supportant les diodes led 102 et une seconde face à partir de laquelle s'étendent verticalement les ailettes 105. Bien entendu, le substrat électronique fixé sur la première face de la partie 100A comprend, outre les diodes led 102, les différentes pistes de connexion électriques pour l'alimentation des diodes led et d'autres composants électroniques éventuels du circuit.

Dans cette forme de réalisation, la pièce 100A est réalisée par usinage à partir d'un bloc de graphite anisotrope présentant une bonne rigidité mécanique. En variante, la pièce 100A peut être de type composite en étant constituée par exemple d'une base 101A et d'ailettes 105 réalisées avec des matériaux de types différents tels que graphite naturel / graphite anisotrope, céramique / graphite anisotrope, aluminium / graphite anisotrope ou d'autres combinaisons.

La pièce 100A est ici réalisée de manière à avoir une direction privilégiée de conductivité thermique parallèle aux ailettes 105 et dans la direction de l'épaisseur de la base 101A. Dans cette direction privilégiée, la pièce 100A offre une résistance thermique Rt_{A1} de valeur faible par rapport à celle Rt_{A2} existant dans les plans de matière perpendiculaires à la direction privilégiée.

Dans cette forme de réalisation, la pièce 100B en graphique anisotrope remplit une fonction d'écran thermique, en empêchant une élévation de température dans l'environnement des diodes led 102 due au dégagement de chaleur apporté par la lampe incandescente 142 montrée à la Fig.3.

La pièce 100B comporte ici deux sections planes en équerre, 101B et 102B, présentant une résistance thermique Rt_{B1} de valeur élevée dans la direction de l'épaisseur. Dans les plans de matière des sections 101B et 102B, le graphite anisotrope présente une direction privilégiée de conductivité thermique avec une résistance thermique Rt_{B2} de valeur sensiblement plus faible que celle de Rt_{B1}.

Bien entendu, de manière générale, l'homme du métier pourra jouer sur les épaisseurs et les longueurs dans différentes portions des pièces en graphite anisotrope afin d'ajuster les résistances thermiques à des valeurs souhaitées.

La rigidité de la pièce 100B est ici obtenue grâce à des éléments rigides 103B noyés dans la matière. La pièce 100B est fabriquée par exemple à l'aide d'une technique de moulage avec compression.

En référence aux Figs.4 et 5, il est maintenant décrit deux autres exemples de configuration de pièce 100' et 100", du type pièce 100, dans des formes de réalisation différentes d'un dispositif d'éclairage et/ou signalisation selon l'invention.

La pièce 100' montrée à la Fig.4 est par exemple obtenue par des opérations de moulage avec compression et usinage d'un seul bloc de graphite anisotrope.

La pièce 100' comprend une partie 101' formant radiateur de dissipation thermique et une partie 102' formant écran thermique. Des substrats électroniques 103' et 104' sont fixés selon une configuration de type sandwich sur des faces opposées de la partie 102'.

La direction privilégiée de conductivité thermique de la pièce 100' est située dans les plans de matière de la partie 102' perpendiculaires à l'épaisseur de cette dernière et parallèles aux ailettes du radiateur 101'. La résistance thermique selon la direction privilégiée de la pièce 100' a une valeur Rt'₁ bien inférieure de celle Rt'₂ existant dans la direction de l'épaisseur de la partie 102'.

La résistance thermique Rt'₂ élevée permet d'obtenir dans cette configuration un effet d'écran thermique entre une diode led 105' montée sur le substrat 103' et des sources de chaleur (non représentées) présentes sur le substrat 104'.

La rigidité de cette configuration est apportée par les substrats 103' et 104'. Des feuilles d'interfaces thermiques 106' et 107' en graphite anisotrope sont ici prévus entre les substrats 103' et 104' et les faces correspondantes de la partie 102'.

La pièce 100" montrée à la Fig.5 est de type composite, ce qui signifie ici qu'elle est formée de premier et second éléments distincts, fixés rigidement l'un à l'autre, par exemple par collage.

Le premier élément est formé par un radiateur en aluminium anodisé 101". Le second élément est un support de substrat / écran thermique 102" comportant une plaquette de graphite anisotrope 103" en sandwich entre un substrat électronique 104" et une plaque métallique de blindage électromagnétique ou couche de métallisation 105".

Le substrat 104" et la plaque 105" sont fixés sur des faces opposées de la plaquette 103".

Une source à diode led de puissance 106" est montée sur le substrat 104" sur une portion de celui-ci située au-dessus du radiateur 101". Outre la rigidité mécanique qui peut être apportée ici par le substrat 104", une rigidité mécanique supplémentaire est octroyée à cette configuration par le radiateur 101" fixé à la plaquette 103".

Dans cette configuration, le blindage électromagnétique 105" a pour fonction principale d'améliorer les performances de compatibilité électromagnétique (CEM) du dispositif d'éclairage et/ou signalisation selon l'invention. Toutefois, sous la forme d'une feuille métallique rigide, le blindage 105" peut participer aussi à la rigidité mécanique de l'ensemble.

L'effet d'écran thermique est obtenu ici du fait d'une résistance thermique Rt"₁ de valeur élevée selon la direction de l'épaisseur de la plaquette 103".

Bien que dans les différentes formes de réalisation décrites ci-dessus il soit recherché une rigidité mécanique globale de la pièce 100, 100', 100", il convient de noter ici que dans d'autres formes de réalisation la flexibilité du graphite anisotrope constitue un avantage. Ainsi, par exemple, dans un feu de signalisation à diodes led pour véhicule automobile, la réalisation d'une pièce structurelle flexible en graphite anisotrope incorporant des parties formant radiateurs et des parties autorisant le montage de substrats électroniques supportant les sources à diodes led peut s'avérer, dans certaines applications, être une solution techniquement et économiquement performante par rapport à des solutions connues basées sur l'utilisation de substrats flexibles dits « flex » et de radiateurs en aluminium.

## Revendications

1. Dispositif d'éclairage et/ou signalisation pour véhicule automobile comprenant au moins une source de lumière à diode électroluminescente de puissance (102) et au moins une autre source de chaleur (142), **caractérisé en ce qu'**il comprend une pièce de support (100) formée au moins partiellement dans un matériau à base de graphite anisotrope supportant ladite source de lumière à diode électroluminescente de puissance, ladite pièce de support comprenant une paroi (101B) séparant la source de lumière à diode (102) de ladite autre source de chaleur (142), ladite paroi présentant une résistance thermique (RtB1) supérieure à travers son épaisseur que longitudinalement (RtB2) et pouvant ainsi servir d'écran thermique entre ladite source de lumière à diode et ladite autre source de chaleur.

2. Dispositif selon la revendication précédente, **caractérisé en ce que** la pièce support (100), de part son anisotropie conférée par le graphite qui la compose au moins partiellement, et de part sa forme, est aussi peu conductrice que possible entre la source de lumière à diode (102) et ladite autre source de chaleur (142) et est aussi conductrice que possible entre la source de lumière à diode (102) et une zone « froide » du projecteur ou du voisinage du projecteur.

3. Dispositif selon l'une des revendications précédentes, **caractérisé en ce que** ladite pièce de support (100) comprend au moins un radiateur de dissipation thermique (105).

4. Dispositif selon la revendication précédente, **caractérisé en ce qu'**il comprend également un ventilateur (106) apte à forcer une circulation d'air à travers ledit radiateur de dissipation thermique (105).

5. Dispositif selon la revendication 3 ou 4, **caractérisé en ce que** ledit radiateur de dissipation thermique (105) comporte au moins une partie (101A) formée dans un matériau à base de graphite anisotrope, ladite partie ayant une direction privilégiée de conductivité thermique (RtA1) qui est parallèle à des ailettes dudit radiateur.

6. Dispositif selon l'une quelconque des revendications 3 à 5, **caractérisé en ce que** ledit radiateur de dissipation thermique (105) comporte au moins une partie en aluminium (101").

7. Dispositif selon l'une des revendications précédentes, **caractérisé en ce que** ladite pièce de support comprend deux parties (100A, 100B) en un ou plusieurs matériaux anisotropes :
- une partie (100A) formant radiateur de dissipation thermique, pour dissiper la chaleur générée par ladite source de lumière à diode électroluminescente de puissance (102), ladite partie (100A) formant radiateur comprenant une première face sur laquelle est fixé un substrat électronique (102A) supportant ladite source de lumière à diode électroluminescente de puissance (102) et une seconde face à partir de laquelle s'étendent verticalement des ailettes (105), et
- une partie (100B) remplissant une fonction d'écran thermique.

8. Dispositif selon la revendication précédente, **caractérisé en ce que** la partie (100A) formant radiateur de dissipation thermique est usinée à partir d'un bloc de graphite anisotrope conférant une rigidité mécanique.

9. Dispositif selon l'une quelconque des revendications 1 à 7, **caractérisé en ce qu'**il comprend des éléments (103B, 101", 103', 104') conférant une rigidité mécanique à ladite pièce de support (100).

10. Dispositif selon la revendication précédentes, **caractérisé en ce que** lesdits éléments comprennent au moins un substrat électronique (103') sur lequel est monté ladite source de lumière à diode électroluminescente de puissance (102).

11. Dispositif selon la revendication 9 ou 10, **caractérisé en ce que** lesdits éléments comprennent au moins deux plaques rigides (104", 105"; 103', 104') disposées, dans une configuration en sandwich, de part et d'autre d'au moins une partie (102', 102") du matériau à base de graphite anisotrope formant écran thermique, au moins une desdites plaques rigides étant constituée par un substrat électronique (103', 104") sur lequel est monté ladite source de lumière à diode électroluminescente de puissance (102, 106").

12. Dispositif selon la revendication 10 ou 11, **caractérisé en ce qu'**une au moins desdites plaques rigides est une plaque formant plan de masse (105") apte à remplir une fonction de blindage électromagnétique.

13. Dispositif selon l'une quelconque des revendications précédentes, **caractérisé en ce qu'**il comprend des moyens (107, 108) coopérant avec ladite pièce de support (100) de manière à autoriser un réglage en rotation, selon au moins un axe prédéterminé, de ladite pièce de support (100).

14. Dispositif selon l'une quelconque des revendications précédentes, caractérisé l'autre source de chaleur comporte au moins une source de lumière parmi les suivantes : une source de lumière à diode électroluminescente de puissance (102), une lampe à incandescence (142) et une lampe à décharge.

15. Dispositif selon l'une des revendications précédentes, **caractérisé en ce que** la pièce support comprend plusieurs parois (100A, 100B), notamment disposées obliquement ou perpendiculairement l'une à l'autre.

16. Dispositif selon la revendication précédente, **caractérisé en ce que** les différentes parois de la pièce support (100A, 100B) sont mono ou multi composants.

17. Véhicule automobile **caractérisé en ce qu'**il comprend au moins un dispositif d'éclairage et/ou signalisation selon l'une quelconque des revendications précédentes.

## Patentansprüche

1. Beleuchtungs- und/oder Signalvorrichtung für ein Kraftfahrzeug, umfassend mindestens eine Leistungs-LED-Lichtquelle (102) und mindestens eine andere Wärmequelle (142), **dadurch gekennzeichnet, dass** sie einen Trägerteil (100) umfasst, der mindestens teilweise in einem anisotropen Material auf Graphitbasis ausgebildet ist, das die Leistungs-LED-Lichtquelle trägt, wobei das Trägerteil eine Wand (1 01 B) umfasst, die die Diodenlichtquelle (102) von der anderen Wärmequelle (1 42) trennt, wobei die Wand einen Wärmewiderstand (RtB1) aufweist, der durch ihre Dicke größer ist als in Längsrichtung (RtB2) und somit als Wärmeschild zwischen der Diodenlichtquelle und der anderen Wärmequelle dienen kann.

2. Vorrichtung nach dem vorhergehenden Anspruch, **dadurch gekennzeichnet, dass** das Trägerteil (1 00) aufgrund seiner Anisotropie, die durch den Graphit, der es zumindest teilweise zusammensetzt, und aufgrund seiner Form übertragen wird, zwischen der Diodenlichtquelle (102) und der anderen Wärmequelle (142) so nicht leitfähig wie möglich ist und zwischen der Diodenlichtquelle (102) und einer "kalten" Zone des Projektors oder der Nähe des Projektors so leitfähig wie möglich ist.

3. Vorrichtung nach einem der vorhergehenden Ansprüche, **dadurch gekennzeichnet, dass** das Trägerteil (100) mindestens einen Wärmeabfuhrstrahler (105) umfasst.

4. Vorrichtung nach dem vorhergehenden Anspruch, **dadurch gekennzeichnet, dass** sie auch einen Ventilator (106) umfasst, der in der Lage ist, die Luftzirkulation durch den Wärmeabfuhrstrahler (105) zu forcieren.

5. Die Vorrichtung nach Anspruch 3 oder 4, **dadurch gekennzeichnet, dass** der Kühlkörper (105) mindestens einen Abschnitt (101 A) aufweist, der aus einem anisotropen Material auf Graphitbasis gebildet ist, wobei der Abschnitt eine Vorzugsrichtung der Wärmeleitfähigkeit (RtA1) aufweist, die parallel zu den Rippen des Kühlkörpers ist.

6. Vorrichtung nach einem der Ansprüche 3 bis 5, **dadurch gekennzeichnet, dass** der Wärmeabfuhrstrahler (105) mindestens ein Aluminiumteil (101") umfasst.

7. Vorrichtung nach einem der vorhergehenden Ansprüche, **dadurch gekennzeichnet, dass** der Trägerteil zwei Teile (1 OOA, 100B) aus einem oder mehreren anisotropen Materialien umfasst:
- einen Kühlkörperabschnitt (1 OOA) zum Ableiten von Wärme, die von der Leistungs-Leuchtdiodenquelle (1 02) erzeugt wird, wobei der Kühlkörperabschnitt (1 OOA) eine erste Fläche umfasst, an der ein elektronisches Substrat (102A) befestigt ist, das die Leistungs-Leuchtdioden-Leuchtquelle (102) trägt, und eine zweite Fläche aus vertikal verlaufenden Rippen (1 05),
- und einen Abschnitt (1 OOB), der eine Hitzeschutzfunktion erfüllt.

8. Vorrichtung nach dem vorhergehenden Anspruch, **dadurch gekennzeichnet, dass** das den Wärmeabfuhrstrahler bildende Teil (1 OOA) aus einem anisotropen Graphitblock mit mechanischer Steifigkeit gefertigt ist.

9. Vorrichtung nach einem der Ansprüche 1 bis 7, **gekennzeichnet durch** dass es Elemente (103B, 101 103', 104') umfasst, die dem Trägerteil (100) mechanische Steifigkeit verleihen.

10. Vorrichtung nach dem vorherigen Anspruch, **dadurch gekennzeichnet, dass** die Elemente mindestens ein elektronisches Substrat (103') umfassen, auf dem die Power-LED-Lichtquelle (102) montiert ist.

11. Vorrichtung nach Anspruch 9 oder 10, **dadurch gekennzeichnet, dass** die Elemente mindestens zwei starre Platten (104", 105"; 103', 104') umfassen, die in Sandwichanordnung auf beiden Seiten mindestens eines Teils (102', 102") des anisotropen Graphitmaterials angeordnet sind, das einen Wärmeschutz bildet, wobei mindestens eine der starren Platten aus einem elektronischen Substrat (103', 104") besteht, auf dem die Power-LED-Lichtquelle (1 02, 106") montiert ist.

12. Die Vorrichtung nach Anspruch 10 oder 1 1, **dadurch gekennzeichnet, dass** mindestens eine der starren Platten eine Grundplatte (105") ist, die in der Lage ist, eine elektromagnetische Abschirmfunktion auszuführen.

13. Vorrichtung nach einem der vorhergehenden Ansprüche, **dadurch gekennzeichnet, dass** sie Mittel (1 07, 108) umfasst, die mit dem Trägerteil (100) zusammenwirken, um eine Rotationseinstellung des Trägerteils (100) entlang mindestens einer vorbestimmten Achse zu ermöglichen.

14. Vorrichtung nach einem der vorstehenden Ansprüche, **dadurch gekennzeichnet, dass** die andere Wärmequelle mindestens eine der folgenden Lichtquellen aufweist: eine Power-LED-Lichtquelle (1 02), eine Glühlampe (142) und eine Entladungslampe.

15. Vorrichtung nach einem der vorstehenden Ansprüche, **dadurch gekennzeichnet, dass** das Trägerteil mehrere Wände (1 OOA, 100B) umfasst, insbesondere schräg oder senkrecht zueinander angeordnet.

16. Vorrichtung nach dem vorstehenden Anspruch, **dadurch gekennzeichnet, dass** die verschiedenen Wände des Trägerteils (1 OOA, 100B) ein- oder mehrteilig sind.

17. Kraftfahrzeug, **dadurch gekennzeichnet, dass** es mindestens eine Beleuchtungs- und/oder Signalvorrichtung nach einem der vorstehenden Ansprüche beinhaltet.

## Claims

1. Lighting and/or signalling device for a motor vehicle comprising at least one power LED light source (102) and at least one other heat source (142), **characterized in that** it comprises a support part (100) formed at least partially in an anisotropic graphite-based material supporting said power LED light source, said support part comprising a wall (1 01 B) separating the diode light source (102) from said other heat source (1 42), said wall having a thermal resistance (RtB1) greater through its thickness than longitudinally (RtB2) and thus being able to serve as a thermal shield between said diode light source and said other heat source.

2. Device according to the previous claim, **characterized in that** the support part (1 00), due to its anisotropy conferred by the graphite which composes it at least partially, and due to its shape, is as non-conductive as possible between the diode light source (102) and said other heat source (142) and is as conductive as possible between the diode light source (102) and a "cold" zone of the projector or the vicinity of the projector.

3. Device according to one of the previous claims, **characterized in that** said support part (100) comprises at least one heat dissipation radiator (105).

4. Device according to the previous claim, **characterized in that** it also comprises a fan (106) capable of forcing air circulation through said heat dissipation radiator (105).

5. The device according to claim 3 or 4, **characterized in that** said heat sink (105) has at least one portion (101 A) formed in an anisotropic graphite-based material, said portion having a preferential direction of thermal conductivity (RtA1) which is parallel to fins of said sink.

6. A device according to any of claims 3 to 5, **characterized in that** said heat dissipation radiator (105) comprises at least one aluminum part (101").

7. Device according to one of the previous claims, **characterized in that** said support part comprises two parts (1 OOA, 100B) made of one or more anisotropic materials:
- a heat sink portion (1 OOA) for dissipating heat generated by said power light-emitting diode source (1 02), said heat sink portion (1 OOA) comprising a first face to which is attached an electronic substrate (102A) supporting said power light-emitting diode light source (102) and a second face from vertically extending fins (1 05)
- and a portion (1 OOB) performing a heat shield function.

8. Device according to the previous claim, **characterized in that** the part (1 OOA) forming the heat dissipation radiator is machined from an anisotropic graphite block providing mechanical rigidity.

9. Device according to any of claims 1 to 7, **characterized in** what he comprises elements (103B, 101 103', 104') conferring mechanical rigidity to said support part (100).

10. Device according to the previous claim, **characterized in that** said elements comprise at least one electronic substrate (103') on which is mounted said power LED light source (102).

11. Device according to claim 9 or 10, **characterized in that** said elements comprise at least two rigid plates (104", 105"; 103', 104') arranged in a sandwich configuration on either side of at least one part (102', 102") of the anisotropic graphite material forming a thermal screen, at least one of said rigid plates being constituted by an electronic substrate (103', 104") on which said power LED light source (1 02, 106") is mounted.

12. The device according to claim 10 or 1 1, **characterized in that** at least one of said rigid plates is a ground plane plate (105") capable of performing an electromagnetic shielding function.

13. Device according to any of the preceding claims, **characterized in that** it comprises means (1 07, 108) cooperating with said support part (100) in order to allow a rotational adjustment, along at least one predetermined axis, of said support part (100).

14. Device according to any of the above claims, **characterized in that** the other heat source has at least one of the following light sources: a power LED light source (1 02), an incandescent lamp (142) and a discharge lamp.

15. Device according to one of the previous claims, **characterized in that** the support part comprises several walls (1 OOA, 100B), in particular arranged obliquely or perpendicularly to each other.

16. Device according to the previous claim, **characterized in that** the different walls of the support part (1 OOA, 100B) are single or multi-component.

17. Motor vehicle **characterized in that** it includes at least one lighting and/or signalling device according to any of the preceding claims.
